# EUROPÄISCHE PATENTSCHRIFT

(11) **EP 1 831 043 B1**
(45) Veröffentlichungstag und Bekanntmachung des Hinweises auf die Patenterteilung: **03.04.2013**
(21) Anmeldenummer: 05848211.8
(22) Anmeldetag: 03.12.2005
(51) Int. Cl.: B60J 7/20, B60J 7/14

(54) **CABRIOLET-FAHRZEUG MIT EINER BEWEGLICHEN HUTABLAGE**
CABRIOLET VEHICLE HAVING A MOVABLE REAR-WINDOW SHELF
CABRIOLET EQUIPE D'UNE PLAGE ARRIERE MOBILE

(30) Priorität: 22.12.2004 DE 102004061775
(43) Veröffentlichungstag der Anmeldung: 12.09.2007
(73) Patentinhaber: Valmet Automotive Oy, 23500 Uusikaupunki (FI)
(72) Erfinder: BROCKHOFF, Franz-Ulrich, 49565 Bramsche (DE)
(74) Vertreter: Kronthaler, Schmidt & Coll.
(86) Internationale Anmeldenummer: PCT/DE2005/002187
(87) Internationale Veröffentlichungsnummer: WO 2006/066537

(56) Entgegenhaltungen:
- EP-A- 0 949 105
- DE-A1- 4 446 483
- DE-C1- 19 637 038
- US-A- 5 967 593
- US-A1- 2004 056 508
- US-B1- 6 682 149

## Beschreibung

Die Erfindung betrifft ein Cabriolet-Fahrzeug mit einer beweglichen Hutablage, die bei geschlossenem Dach vor einem bezüglich der Fahrtrichtung hinteren Dachabschluß und unterhalb eines Rückfensters gehalten und bei geöffnetem Dach abgesenkt ist, nach dem Oberbegriff des Anspruchs 1.

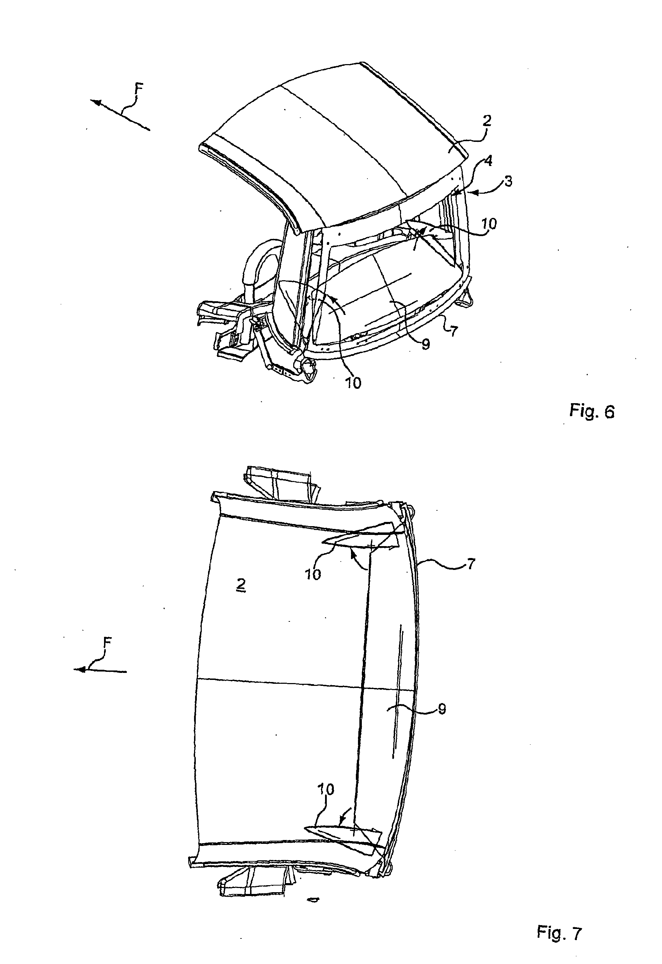

Die EP 0 949 105 A1 zeigt ein Fahrzeug, bei dem eine Hutablage, dort mit dem Bezugszeichen 14 versehen, bei geschlossenem Dach vor einem bezüglich der Fahrtrichtung hinteren Dachabschluß und unterhalb eines Rückfensters gehalten ist und bei Öffnung des Daches mit absenkbar ist. Die Hutablage 14 ist dabei starr an das hintere Dachteil angebunden und steht daher in abgelegter Stellung dieses Dachteils nahezu vertikal nach oben, wie in Fig. 7 zu erkennen ist. Das vordere Dachteil muß bei der Faltung einen großen Abstand zum hinteren Dachteil einhalten, um nicht mit der aufragenden Hutablage zu kollidieren. Dadurch benötigt das abgelegte Dach eine erhebliche Stauraumhöhe, was den verbleibenden Kofferraum verkleinert. Dieses Problem stellt sich insbesondere in seitlich quer außen gelegenen Bereichen des hinteren Dachteils, da diese Bereiche aufgrund der Wölbung des hinteren Dachteils bei geschlossenem Dach weit in Fahrtrichtung ragen und insofern bei abgelegtem Dach weit nach oben vorstehen, sofern bei geschlossenem Dach der gesamte Spalt bis zu den Sitzlehnen 4 durch die Hutablage 14 abgedeckt werden soll.

Der Erfindung liegt das Problem zugrunde, bei einem gattungsgemäßen Cabriolet-Fahrzeug eine möglichst einfache und raumsparende Ablage einer nach Art einer Hutablage wirkenden Abdeckung bei geöffnetem Dach zu erreichen.

Die Erfindung löst dieses Problem durch ein Cabriolet-Fahrzeug mit den Merkmalen des Anspruchs 1. Hinsichtlich vorteilhafter Ausgestaltungen und Weiterbildungen der Erfindung wird auf die weiteren Ansprüche 2 bis 12 verwiesen.

Durch die Erfindung ist ein geringes Packmaß des zusammen mit der Hutablage abgelegten Daches ermöglicht. Insbesondere kann die Stauraumhöhe gering gehalten werden, so daß zum Beispiel bei einem zweiteiligen Dach die beiden Dachteile sehr dicht aneinander anliegen können und somit ein flaches Paket gebildet ist.

Wenn die Außenteile bei Dachöffnung gegenüber einem sie haltenden Teil jeweils um eine einzige Schwenkachse schwenkbar sind, ist die Konstruktion trotz der Beweglichkeit der Außenteile sehr einfach gehalten.

Insbesondere kann vorteilhaft die Schwenkbewegung der Au-βenteile bei Dachbewegung zwangsweise ohne eigenen Antrieb bewirkbar sein, so daß die zusätzliche Einfaltbewegung den konstruktiven Aufwand und das Fahrzeuggewicht nur unwesentlich erhöht.

Für ein geringes Packmaß ist es weiterhin sehr günstig, wenn der Mittelteil der Abdeckung sich während der Dachöffnung flach an einen hinteren, das Rückfenster umfassenden Dachteil anlegt. Der Mittelteil kann dann zwischen dem hinteren und einem vorgeordneten Dachteil gehalten sein, wo er aufgrund der Wölbung des hinteren Dachteils die Gesamtdicke des abgelegten Dachteilpakets nicht erhöht.

Eine einfache Ausgestaltung eines Einfaltmechanismus' ist dadurch zu erreichen, daß die Außenteile an seitlich eines Rückfensters gelegenen Dachsäulen angelenkt sind und mit ihren der Anlenkung abgewandten Bereichen von dem Mittelteil der Abdeckung zugeordneten Führungselementen beaufschlagbar sind. Beispielsweise können die Führungselemente als Auslegerköpfe ausgebildet sein, die die Außenteile untergreifen und auf denen diese abgleiten und dabei um ihre Bewegungsachsen eingeschwenkt werden.

Alternativ ist es auch möglich, daß die Außenteile an dem Mittelteil angelenkt und durch die Dachbewegung gegenüber diesem einklappbar sind.

In beiden Fällen können die Außenteile bei geöffnetem Dach unterhalb des Mittelteils eingeklappt liegen.

Insbesondere ist es für eine raumsparende Dachablage und auch für eine Steuerung der Einklappbewegung der Außenteile vorteilhaft, wenn das Dach feste Dachteile umfaßt und seitlich des Rückfensters gelegene Dachsäulen während der Dachöffnung um zumindest im wesentlichen parallel zu den Seitenkanten des Rückfensters gelegene Achsen einschwenkbar sind. Die Dachsäulen können dann bei dieser Einschwenkbewegung die Außenteile der Abdeckung mitnehmen, so daß diese beim Verschwenken der seitlichen Säulen relativ zum Mittelteil einklappen.

Weitere Vorteile und Merkmale der Erfindung ergeben sich aus in der Zeichnung schematisch dargestellten und nachfolgend beschriebenen Ausführungsbeispielen des Gegenstandes der Erfindung.

In der Zeichnung zeigt:

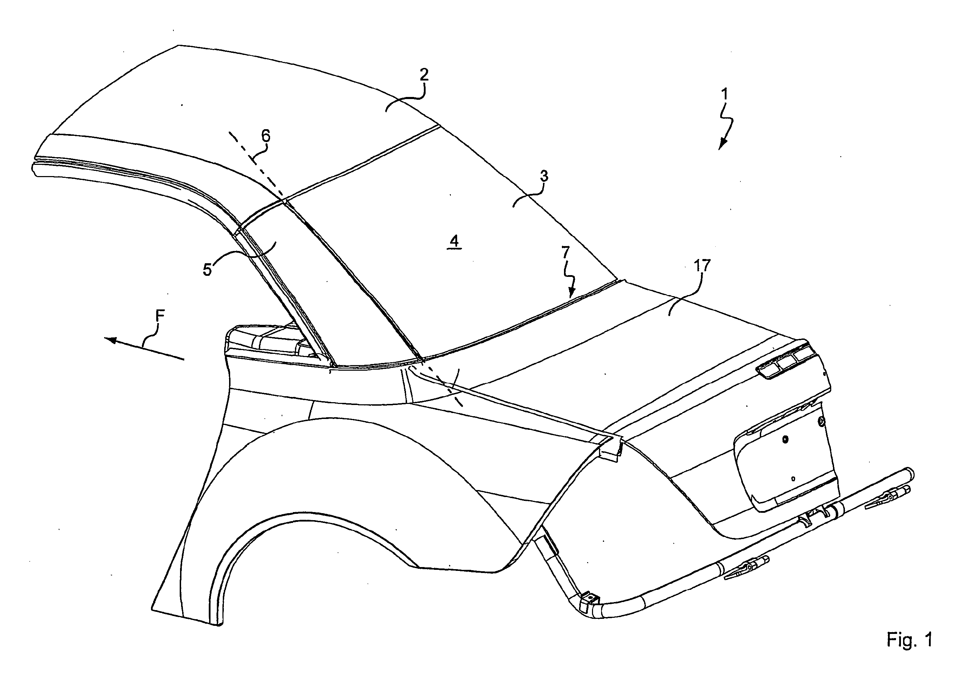

- Fig. 1: eine schematische, perspektivische Außenansicht von schräg hinten auf einen Ausschnitt eines erfindungsgemäßen Cabriolet-Fahrzeugs bei geschlossenem Dach,
- Fig. 2: eine ähnliche Ansicht wie Fig. 1 mit reduziertem Ausschnitt, leicht gedrehter Perspektive und Durchsicht durch das Rückfenster auf die in Abdeckstellung liegenden Teile einer Hutablage,
- Fig. 3: die Dachstellung nach Fig. 2 in Ansicht von oben,

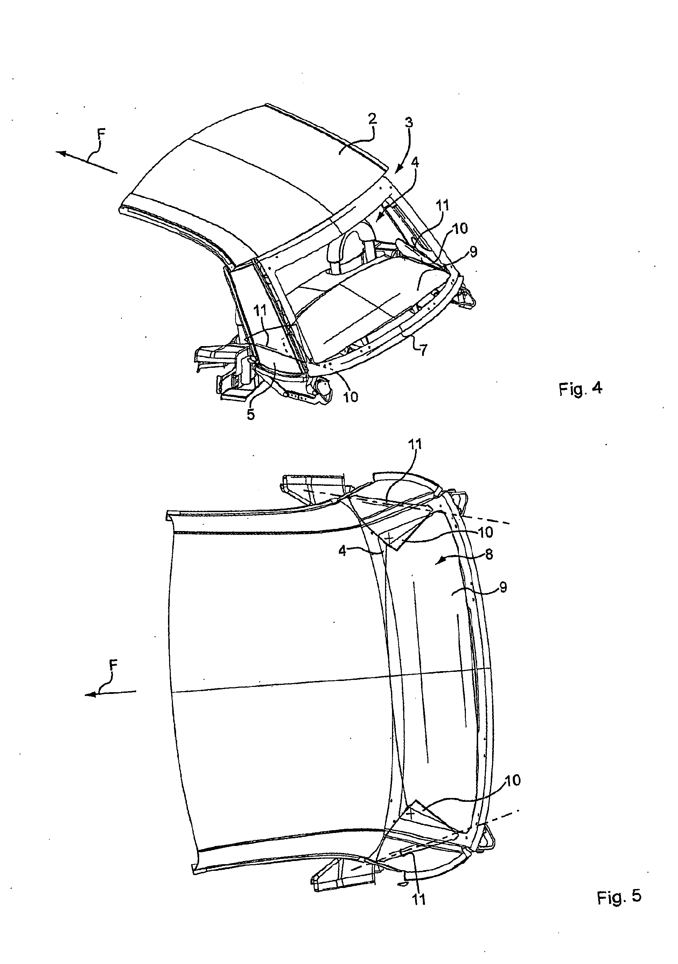

- Fig. 4: eine ähnliche Ansicht wie Fig. 2 bei beginnender Dachöffnung,
- Fig. 5: eine ähnliche Ansicht wie Fig. 3 in Dachstellung nach Fig. 2,
- Fig. 6: eine ähnliche Ansicht wie Fig. 4 bei weiter fortschreitender Dachöffnung,
- Fig. 7: eine ähnliche Ansicht wie Fig. 5 in Dachstellung nach Fig. 6,

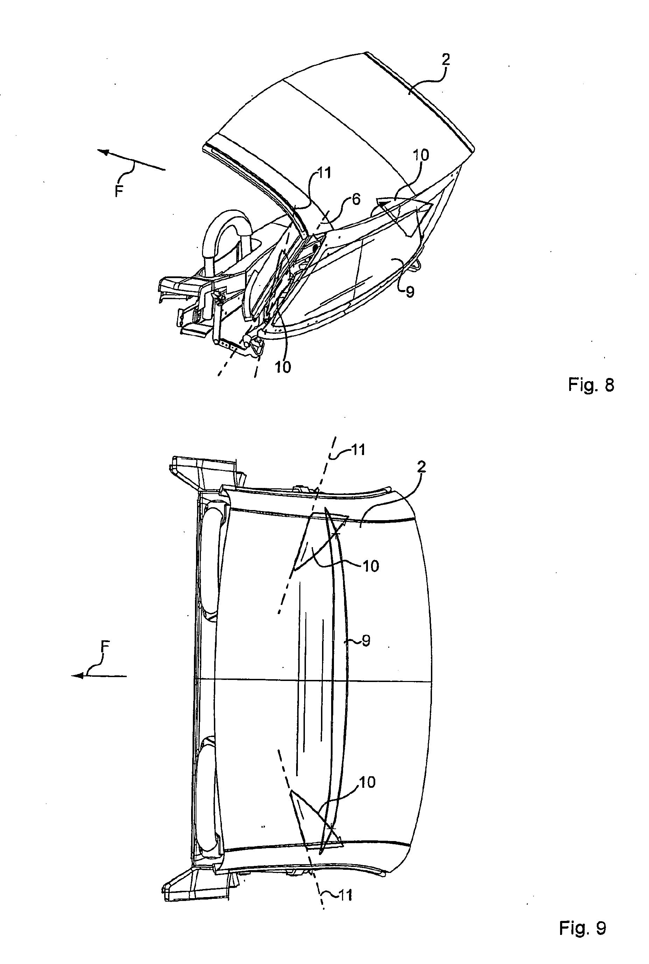

- Fig. 8: eine ähnliche Ansicht wie Fig. 4 bei weiter fortschreitender Dachöffnung,
- Fig. 9: eine ähnliche Ansicht wie Fig. 7 in Dachstellung nach Fig. 8,
- Fig. 10: eine ähnliche Ansicht wie Fig. 4 kurz vor Vollendung der Dachöffnung,
- Fig. 11: eine ähnliche Ansicht wie Fig. 9 in Dachstellung nach Fig. 10,
- Fig. 12: eine ähnliche Ansicht wie Fig. 4 bei vollständig abgelegtem Dach,
- Fig. 13: eine ähnliche Ansicht wie Fig. 11 in Dachstellung nach Fig. 12,

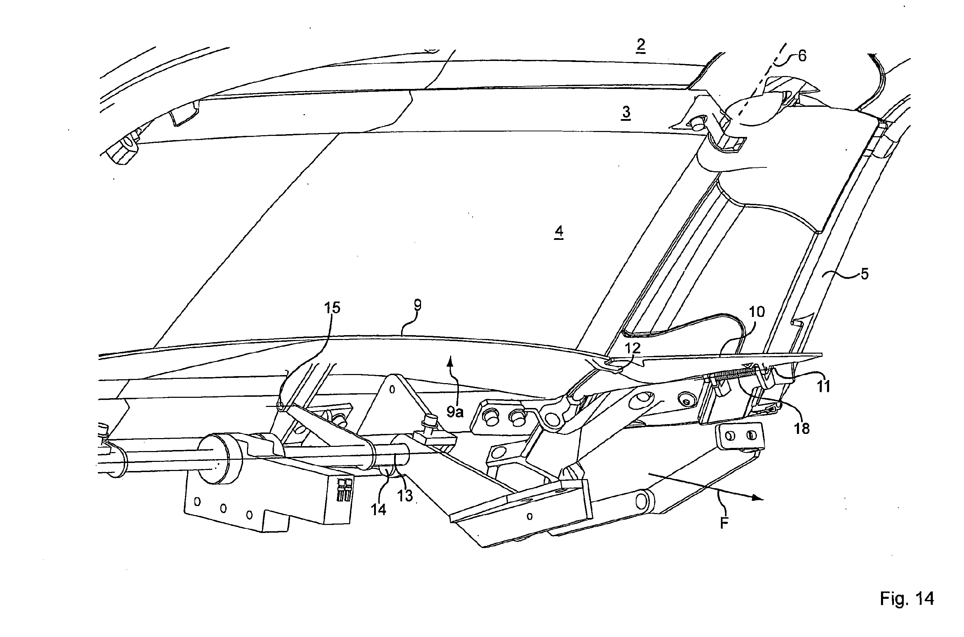

- Fig. 14: eine perspektivische Ansicht von schräg rechts vorne in das noch geschlossene Dach nach Fig. 1,

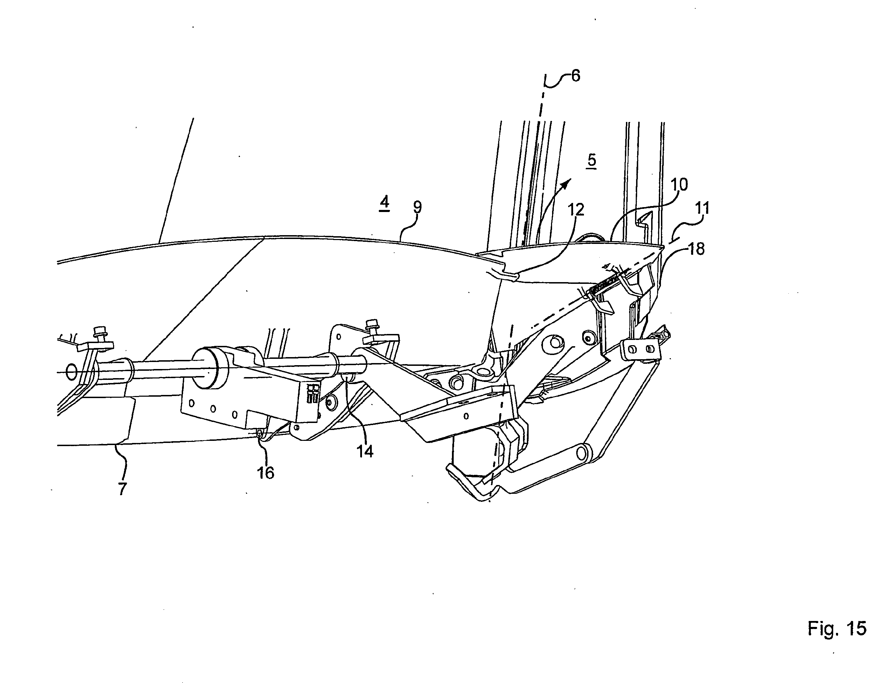

- Fig. 15: eine ähnliche Ansicht wie Fig. 14 in das Dach bei beginnender Öffnung, etwa entsprechend der Stellung nach Fig. 4,
- Fig. 16: eine ähnliche Ansicht wie Fig. 14 in das Dach bei fortschreitender Öffnung, etwa entsprechend der Stellung nach Fig. 6,
- Fig. 17: eine ähnliche Ansicht wie Fig. 14 in das Dach bei fast vollständiger Öffnung, etwa entsprechend der Stellung nach Fig. 8,

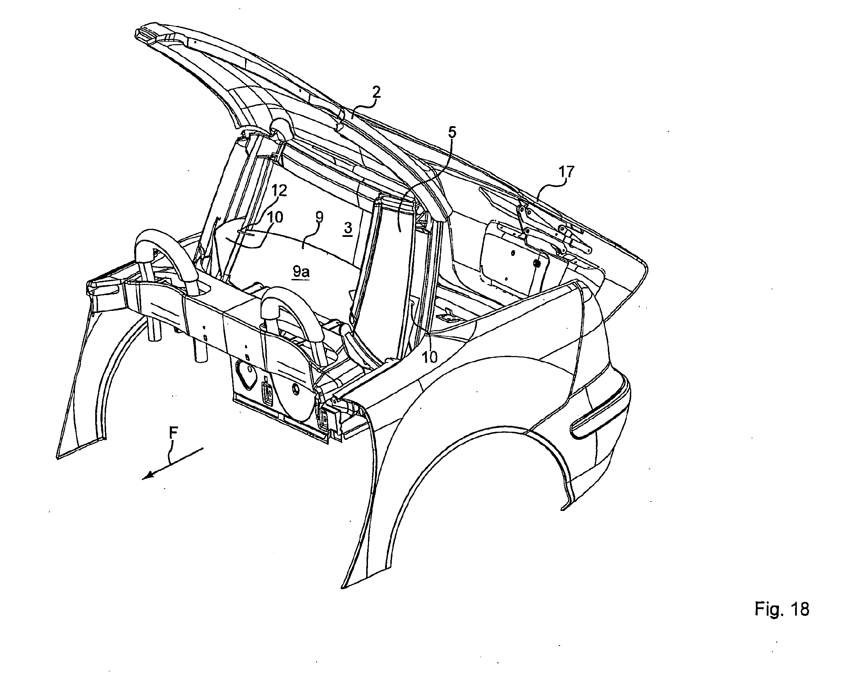

- Fig. 18: eine perspektivische Ansicht von schräg links vorne in das sich öffnende Dach etwa in Stellung nach Fig. 8,
- Fig. 19: eine in der vertikalen Fahrzeuglängsmittelebene geschnittene Ansicht des Daches und der Abdekkung bei geschlossenem Dach,
- Fig. 20: eine ähnliche Ansicht wie Fig. 19 mit einem verkleinerten Ausschnitt, etwa entsprechend dem Detail XX in Fig. 19, jedoch bei beginnender Dachöffnung,
- Fig. 21: eine ähnliche Ansicht wie Fig. 20 bei weiter fortschreitender Dachöffnung,
- Fig. 22: eine ähnliche Ansicht wie Fig. 21 bei fast vollständig geöffnetem Dach.

Das in der Zeichnung dargestellte Cabriolet-Fahrzeug 1 ist als Zweisitzer ausgebildet. Es könnte auch mit zumindest einer Rückbank versehen sein und dann ein vier- oder mehrsitziges Fahrzeug ausbilden.

Das Fahrzeug 1 weist hier ein bewegliches und bei seiner Öffnung im rückwärtigen Fahrzeugbereich ablegbares Dach mit genau zwei Dachteilen 2, 3 hintereinander auf, was jedoch nicht zwingend ist. Die Dachteile 2, 3 können mit zumindest jeweils einem starren Rahmen versehen sein oder feste Plattenteile ausbilden, wobei in dem ersten Dachteil 3 auch ein Schiebedach enthalten sein kann (nicht gezeichnet).

Das hintere Dachteil 3 umfaßt im gezeichneten Ausführungsbeispiel ein Rückfenster 4 sowie seitlich davon zwei Dachsäulen 5, die hier bei Dachöffnung gegenüber dem Rückfenster 4 um zumindest nahezu parallel zu dessen aufragenden Randkanten liegende Achsen 6 einschwenkbar sind.

Die hier zwei Dachteile 2, 3 können manuell oder voll- oder teilautomatisch zu bewegen sein. Es können zudem weitere Dachteile mit einem oder beiden Dachteilen 2, 3 verbunden und eventuell gegenüber diesen relativbeweglich sein.

Bei geschlossenem Dach ist ein Bereich vor dem hinteren Dachabschluß 7 und unterhalb des Rückfensters 4 durch eine bewegliche und insgesamt mit 8 bezeichnete Abdeckung verkleidet. Diese wirkt daher bei geschlossenem Dach nach Art einer Hutablage und überdeckt zumindest teilweise den Spalt zwischen dem Dachabschluß 7 und einem weiter vorne liegenden Überrollschutz bzw. einer Sitzlehne.

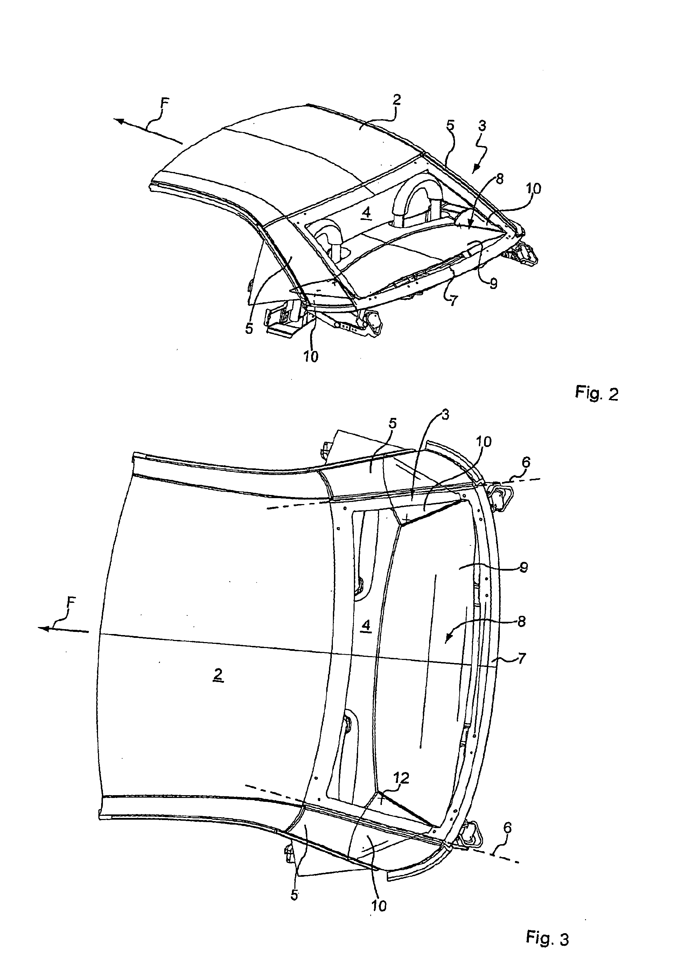

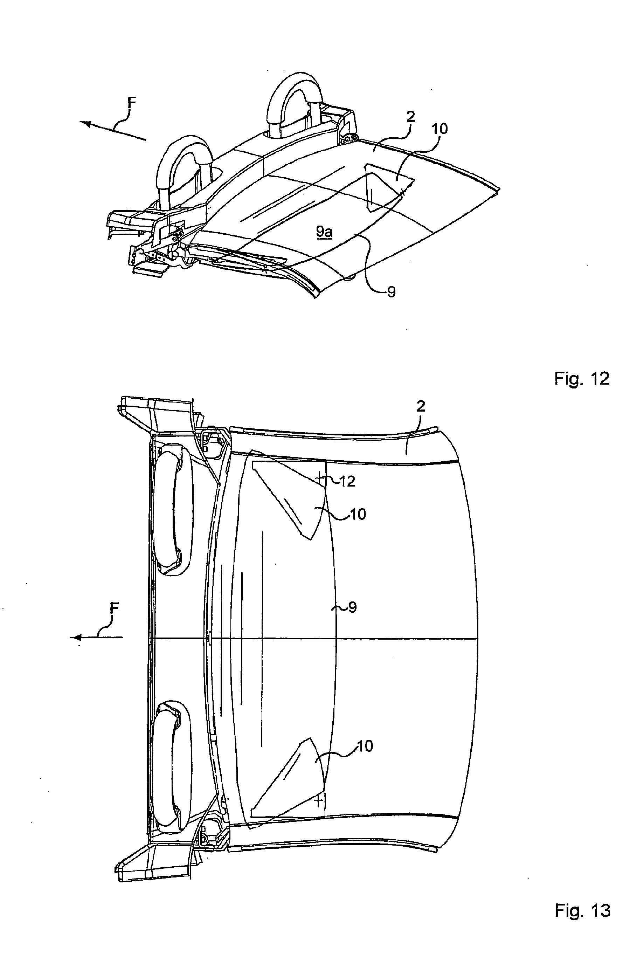

Die Hutablage 8 umfaßt einen bezüglich der Fahrzeugquerrichtung mittleren Teil 9 und hier genau zwei seitlich gelegene Außenteile 10, die bei geschlossenem Dach (Fig. 2, 3) im wesentlichen bündig nebeneinander liegen und die bei geöffnetem Dach (Fig. 12, Fig. 13) gegenüber dem Mittelteil 9 in eine zumindest nahezu antiparallele Ausrichtung eingeklappt sind.

Im Ausführungsbeispiel sind die Außenteile an den um die Achsen 6 eindrehbaren Dachsäulen 5 angelenkt und gegenüber diesen um einfache Schwenkachsen 11 mit einem Freiheitsgrad der Relativbewegung verschwenkbar. Durch das Eindrehen der Säulen 5 während der Dachöffnung ändert die Achse 11 ihre Richtung und dreht als ganzes ebenfalls mit ein.

Alternativ könnten die Außenteile 10 auch - nicht gezeichnet - an dem Mittelteil 9 angelenkt sein und mit ihren auswärts weisenden Enden in Kontakt mit den seitlichen Dachsäulen 6 stehen, so daß durch deren Eindrehen bei der Dachöffnung die äußeren Bereiche beaufschlagt und dadurch gegenüber dem Mittelteil 9 eingeklappt würden.

In jedem Ausführungsbeispiel kann die Einklappbewegung der Außenteile 10 gegenüber dem Mittelteil 9 ohne eigenen Antrieb für diese Schwenkbewegung und ohne irgendwelche Steuerelemente, Bowdenzüge oder ähnliche Kraftfernkopplungen bewirkbar sein, wodurch die Konstruktion wesentlich vereinfacht ist, was jedoch grundsätzlich nicht zwingend ist. Insbesondere ohne die Schwenkbarkeit der seitlichen Säulen 5 könnte auch eine Lösung mit zusätzlichen Antriebs- oder Kraftübertragungselementen in Betracht gezogen werden. Gemäß der Zeichnung wird das Verschwenken der Außenteile 10 um die Achsen 11 allein durch den direkten Kontakt der Außenteile mit an Auslegern des Mittelteils 9 vorgesehenen Führungsteilen 12 bewirkt. Auf diesen liegen die Außenteile 10 bei geschlossenem Dach auf; während des Eindrehens der Säulen 5 gleiten sie darauf ab, werden dabei angehoben und im Einklappsinn um die wandernden Achsen 11 umgeschwenkt.

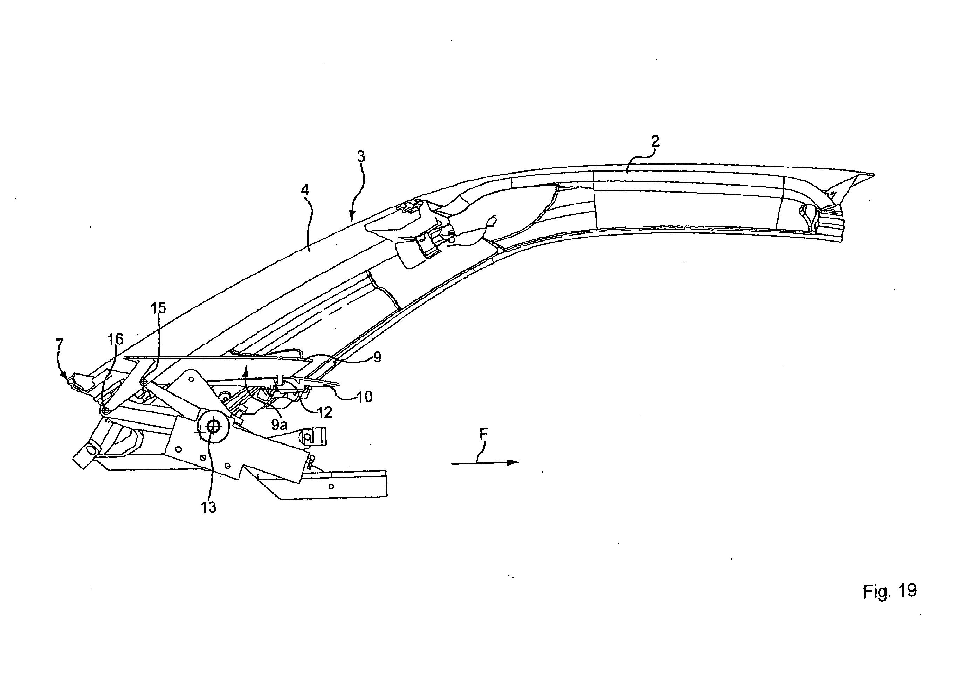

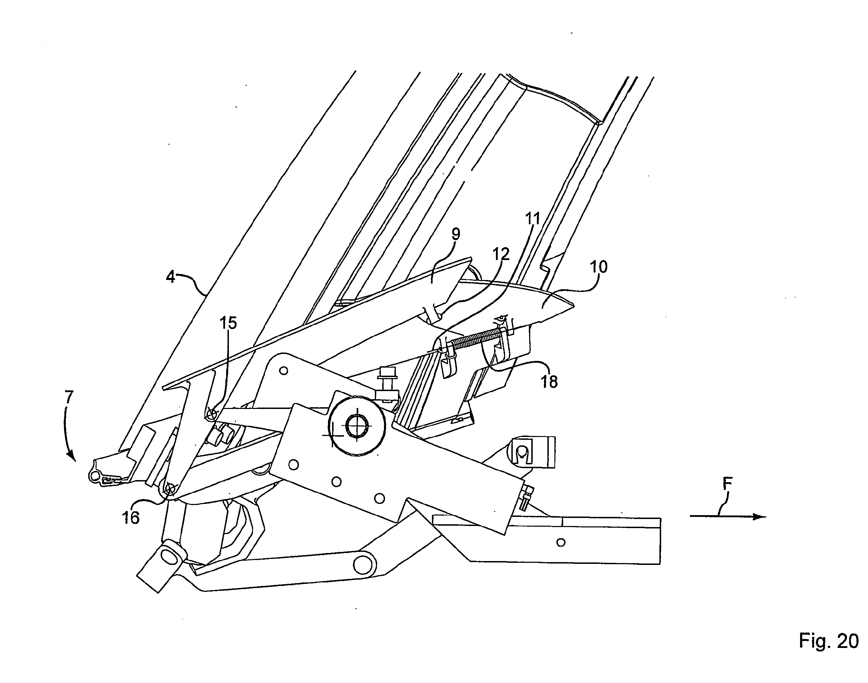

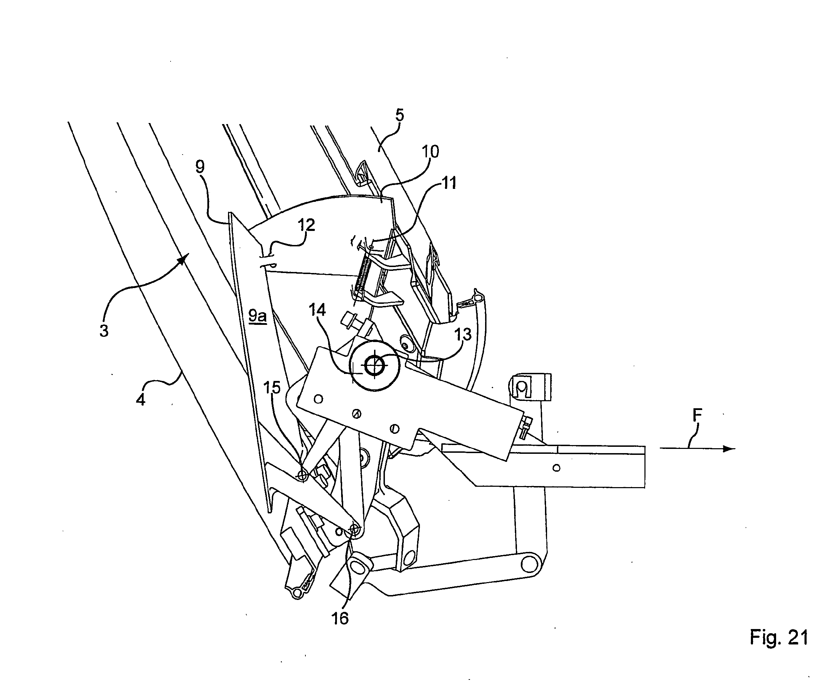

Die Abdeckung 8 ist an einem Viergelenk mit in Fahrzeugquerrichtung liegenden Achsen 13, 14, 15, 16 gehalten, wie beispielsweise in der Ansicht nach den Figuren 19 bis 22 zu erkennen ist, wobei die erste karosseriefeste Achse 13 auch gleichzeitig die Hauptschwenkachse des Daches bei seiner Öffnungs- und Schließbewegung darstellt. Das Dach ist hieran über Lenker angebunden, so daß die Abdeckung 8 vollständig unabhängig vom Dach am Rohbau anmontiert werden kann. Wenn dort etwa Langlöcher mit einer Justagemöglichkeit vorgesehen sind, ist diese Feineinstellung dadurch vereinfacht.

Das Viergelenk 13, 14, 15, 16 bewirkt, daß sich der Mittelteil 9 während der Dachöffnung flach und mit geringem Abstand an das Rückfenster 4 anlegt und dabei mit abgesenkt wird. Bei geöffnetem Dach ist daher die Abdeckung 8 nicht in Abdeckstellung, was einen komplizierten Mechanismus zum zwischenzeitlichen Aufstellen während der Dachöffnung und anschließenden Rückstellen in eine Horizontallage - wobei für Seitenteile unterschiedliche Verhältnisse gelten, je nachdem, ob das Dach geschlossen ist und seitliche Gestängeteile aufragen oder ob diese vollständig unterhalb der Karosseriebrüstungslinie liegen - entbehrlich macht.

Eine zusätzliche Abdeckung für den vor dem Deckelteil 17 bei geöffnetem Dach liegenden Bereich kann vorgesehen und zum Beispiel an dem Deckelteil 17 beweglich halterbar sein.

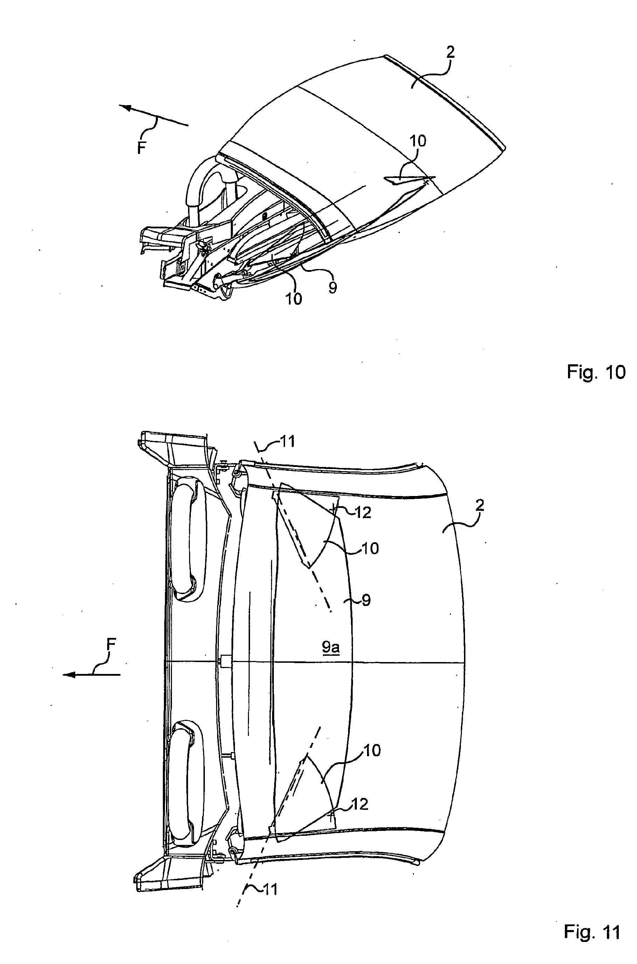

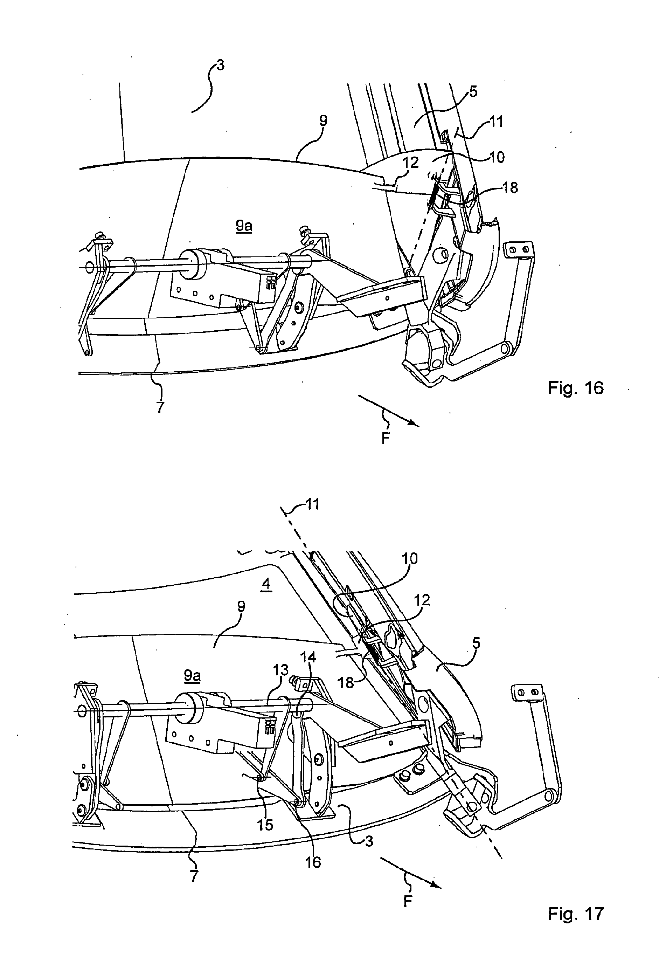

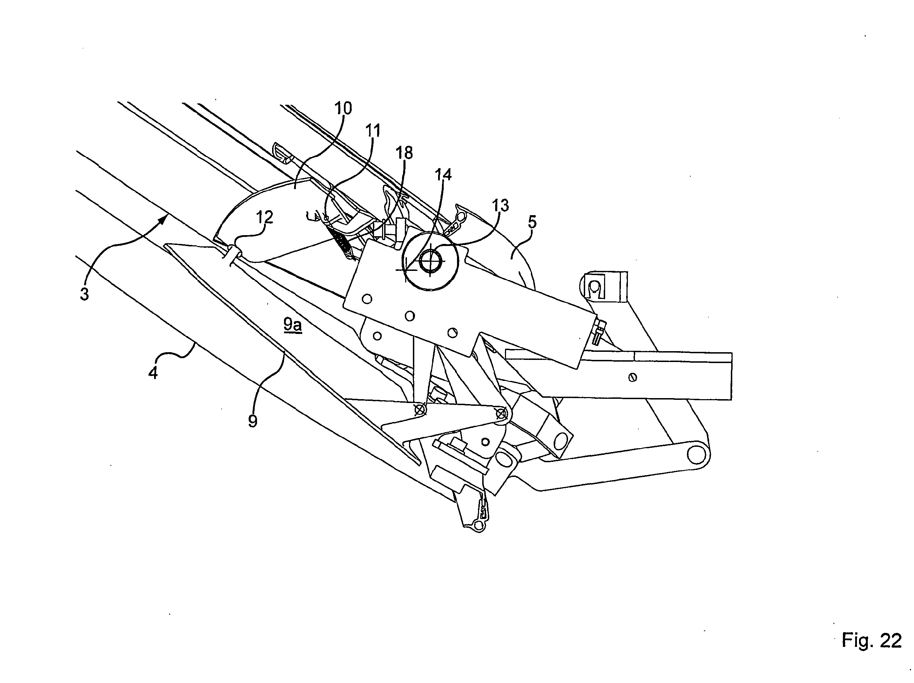

Die flache Anlage des Mittelteils 9 und der sich daran anlegenden Außenteile 10 an den das Rückfenster 4 umfassenden Dachteil 3 ermöglicht ein sehr geringes Packmaß, so daß trotz der zusätzlich eingefalteten Abdeckung 8 die Dicke des Pakets aus abgelegten Dachteilen 2, 3 nicht erhöht ist. Die Außenteile 10 liegen dabei flach und mit gegensinniger Ausrichtung um etwa 180° gegenüber dem Mittelteil 9 eingeschwenkt und dessen bei geschlossenem Dach nach unten zeigender Seite 9a benachbart (Fig. 11, Fig. 13), woran sich dann nach oben hin die eingedrehten Dachsäulen 5 anschließen (Fig. 17, Fig. 22). Den oberen Bereich des abgelegten Daches bildet dann der vordere Dachteil 2.

Während der Öffnungsbewegung des Daches schwenken die seitlichen C-Säulen 5 um die Achsen 6 ein, wobei dieses Einschwenken von einem einzigen Hauptantrieb bewirkt sein kann und seinerseits über obere sphärische Gelenke einen Antrieb auch für das Einklappen der Dachteile 2, 3 gegeneinander darstellen kann.

In jedem Fall wird dadurch der für die Abdeckung 8 verbleibende Raum in Fahrzeugquerrichtung vermindert, so daß sich die Außenteile 10 über die sie untergreifenden Ausleger 12 über den Mittelteil 9 schieben und durch deren gleichzeitiges Anlegen an das nach hinten wegschwenkende Rückfenster 4 somit zwangsweise um die Achsen 11 entgegen einer sie in Abdeckstellung drückenden Feder 18 aufwärts verschwenkt werden. Die Achsen 11 wandern dabei durch die Drehung der Säulen 5 um die Achsen 6 um die nach hinten wegschwenkende Mittelteil 9 herum, so daß am Ende die Au-βenteile zumindest nahezu gegensinnig orientiert oberhalb der Fläche 9a des Mittelteils 9 liegen. Während der ganzen Dachöffnungsbewegung und auch bei vollständig geöffnetem oder geschlossenem Dach bleiben die Außenteile 10 einerseits in Kontakt mit den Führungselementen 12 der Ausleger und andererseits gegensinnig kraftbeaufschlagt von den Federn 18. Daher ist jederzeit eine definierte Lage der Außenteile 10 sichergestellt.

## Patentansprüche

1. Cabriolet-Fahrzeug (1) mit einem im rückwärtigen Fahrzeugbereich ablegbaren Dach, wobei bei geschlossenem Dach ein Bereich vor einem bezüglich der Fahrtrichtung (F) hinteren Dachabschluß (7) und unterhalb eines Rückfensters (4) durch eine Abdeckung (8) nach Art einer Hutablage zumindest teilweise abdeckbar ist und diese bei geöffnetem Dach abgesenkt ist, **dadurch gekennzeichnet, daß** die Abdeckung (8) bezüglich der Fahrzeugquerrichtung einen mittleren Teil (9) und seitlich gelegene Außenteile (10) umfaßt, die bei geöffnetem Dach gegenüber dem Mittelteil (9) in eine zumindest nahezu gegensinnig orientierte Stellung eingeklappt sind.

2. Cabriolet-Fahrzeug (1) nach Anspruch 1, **dadurch gekennzeichnet, daß** die Außenteile (10) bei Dachöffnung gegenüber einem sie haltenden Teil (5;9) jeweils um eine einzige Schwenkachse (11) schwenkbar sind.

3. Cabriolet-Fahrzeug (1) nach einem der Ansprüche 1 oder 2, **dadurch gekennzeichnet, daß** die Schwenkbewegung der Außenteile (10) bei Dachbewegung zwangsweise ohne eigenen Antrieb bewirkbar ist.

4. Cabriolet-Fahrzeug (1) nach einem der Ansprüche 1 bis 3, **dadurch gekennzeichnet, daß** der Mittelteil (9) der Abdeckung (8) sich während der Dachöffnung flach an einen hinteren, das Rückfenster (4) umfassenden Dachteil (3) anlegt.

5. Cabriolet-Fahrzeug (1) nach Anspruch 4, **dadurch gekennzeichnet, daß** der Mittelteil (9) an einem Viergelenk mit quer zum Fahrzeug (1) liegenden Schwenkachsen (13;14;15;15) gehalten ist.

6. Cabriolet-Fahrzeug (1) nach einem der Ansprüche 1 bis 5, **dadurch gekennzeichnet, daß** der Mittelteil (9) ohne direkten Dachkontakt gehalten und unabhängig vom Dach montierbar ist.

7. Cabriolet-Fahrzeug (1) nach einem der Ansprüche 1 bis 6, **dadurch gekennzeichnet, daß** die Außenteile (10) an seitlich eines Rückfensters (4) gelegenen Dachsäulen (5) angelenkt sind und mit ihren der Anlenkung abgewandten Bereichen von dem Mittelteil (9) der Abdeckung (8) zugeordneten Führungselementen (12) beaufschlagbar sind.

8. Cabriolet-Fahrzeug (1) nach Anspruch 7, **dadurch gekennzeichnet, daß** die Führungselemente (12) bei geschlossenem Dach die Außenteile (10) untergreifen und diese durch Abgleiten auf den Führungselementen (12) bei Dachöffnung angehoben werden.

9. Cabriolet-Fahrzeug (1) nach einem der Ansprüche 1 bis 6, **dadurch gekennzeichnet, daß** die Außenteile (10) an dem Mittelteil (9) angelenkt und durch die Dachbewegung gegenüber diesem einklappbar sind.

10. Cabriolet-Fahrzeug (1) nach einem der Ansprüche 1 bis 9, **dadurch gekennzeichnet, daß** die Außenteile (10) bei geöffnetem Dach gegenüber dem Mittelteil (9) eingeklappt und zu dessen bei geschlossenem Dach nach unten zeigender Seite (9a) benachbart liegen.

11. Cabriolet-Fahrzeug (1) nach einem der Ansprüche 1 bis 10, **dadurch gekennzeichnet, daß** das Dach feste Dachteile (2;3) umfaßt und seitlich des Rückfensters (4) gelegene Dachsäulen (5) während der Dachöffnung um zumindest im wesentlichen parallel zu den Seitenkanten des Rückfensters (4) gelegene Achsen (6) einschwenkbar sind.

12. Cabriolet-Fahrzeug (1) nach Anspruch 11, **dadurch gekennzeichnet, daß** die Außenteile (10) beim Verschwenken der seitlichen Säulen (5) von diesen bewegbar sind und dadurch relativ zum Mittelteil (9) einklappen.

## Claims

1. A convertible vehicle (1) comprising a roof which can be stowed in the rear vehicle section, wherein, when the roof is closed, a region which is located in front of a roof-terminating portion (7), which is situated at the rear in the direction of travel (F), and below a rear window (4) can be covered at least partly by a shelf-type cover (8) which is lowered when the roof is open, **characterised in that**, with respect to the transverse vehicle direction, the cover (8) comprises a central part (9) and laterally situated outer parts (10) which are folded in with respect to the central part (9), when the roof is open, into an at least approximately opposite position.

2. The convertible vehicle (1) according to claim 1, **characterised in that** the outer parts (10) can each be pivoted about one single axis of pivot (11), with respect to a part (5; 9) supporting them when the roof is open.

3. The convertible vehicle (1) according to any one of claims 1 or 2, **characterised in that** the pivoting movement of the outer parts (10) can be effected compulsorily, without a separate drive, when moving the roof.

4. The convertible vehicle (1) according to any one of claims 1 to 3, **characterised in that** the central part (9) of the cover (8) lies flat against a rear roof part (3) when opening the roof, said rear roof part (3) comprising the rear window (4).

5. The convertible vehicle (1) according to claim 4, **characterised in that** the central part (9) is supported on a four-bar linkage with axes of pivot (13;14;15;16) extending transversely to the vehicle (1).

6. The convertible vehicle (1) according to any one of claims 1 to 5, **characterised in that** the central part (9) is supported without direct roof contact and can be mounted independently of the roof.

7. The convertible vehicle (1) according to any one of claims 1 to 6, **characterised in that** the outer parts (10) are articulated to roof pillars (5) located laterally of a rear window (4) and their areas facing away from the articulation can be acted upon by guiding elements (12) assigned to the central part (9) of the cover (8).

8. The convertible vehicle (1) according to claim 7, **characterised in that** the guiding elements (12) engage beneath the outer parts (10) when the roof is closed and the outer parts (10) are lifted by sliding on the guiding elements (12) when opening the roof.

9. The convertible vehicle (1) according to any one of claims 1 to 6, **characterised in that** the outer parts (10) are articulated to the central part (9) and can be folded in with respect to the latter by the roof movement.

10. The convertible vehicle (1) according to any one of claims 1 to 9, **characterised in that** the outer parts (10) are folded in with respect to the central part (9) when the roof is opened and are adjacent to the side (9a) of the central part (9), said side (9a) facing down when the roof is closed.

11. The convertible vehicle (1) according to any one of claims 1 to 10, **characterised in that** the roof comprises fixed roof parts (2;3) and **in that** roof pillars (5) located laterally of the rear window (4) can be pivoted inward, when opening the roof, about axes (6) which are at least substantially parallel to the lateral edges of the rear window (4).

12. The convertible vehicle (1) according to claim 11, **characterised in that** the outer parts (10) can be moved away from the lateral pillars (5) when pivoting the latter, said outer parts (10) thus being folded in with respect to the central part (9).

## Revendications

1. Véhicule cabriolet (1) avec un toit que l'on peut ranger à l'arrière du véhicule, dans lequel, lorsque le toit est fermé, une région qui se trouve en avant d'une bordure de toit (7), située à l'arrière en direction de marche (F), et au-dessous d'une lunette arrière (4) peut être couvert au moins partiellement d'un couvercle (8) du type plage arrière qui est abaissé lorsque le toit est ouvert,
**caractérisé en ce que** le couvercle (8) comprend, par rapport à la direction transversale du véhicule, une partie centrale (9) et des parties extérieures (10) latérales qui sont rabattues, lorsque le toit est ouvert, vers l'intérieur par rapport à la partie centrale (9) jusqu'à atteindre une position au moins approximativement opposée.

2. Véhicule cabriolet (1) selon la revendication 1, **caractérisé en ce que**, lorsque le toit est ouvert, les parties extérieures (10) peuvent chacune pivoter autour d'un seul axe de pivotement (11) par rapport à une partie (5; 9) qui les supporte.

3. Véhicule cabriolet (1) selon l'une quelconque des revendications 1 ou 2, **caractérisé en ce que** le pivotement des parties extérieures (10) peut être effectué forcément, sans entraînement séparé, lors du déplacement du toit.

4. Véhicule cabriolet (1) selon l'une quelconque des revendications 1 à 3, **caractérisé en ce que** la partie centrale (9) du couvercle (8) épouse étroitement la forme d'une partie de toit arrière (3) lors de l'ouverture du toit, ladite partie de toit arrière (3) comprenant la lunette arrière (4).

5. Véhicule cabriolet (1) selon la revendication 4, **caractérisé en ce que** la partie centrale (9) est supportée par un ensemble à quatre articulations présentant des axes de pivotement (13;14;15;16) situés en direction transversale par rapport au véhicule (1).

6. Véhicule cabriolet (1) selon l'une quelconque des revendications 1 à 5, **caractérisé en ce que** la partie centrale (9) est supporté sans contact directe avec le toit et peut être installée indépendamment de ce dernier.

7. Véhicule cabriolet (1) selon l'une quelconque des revendications 1 à 6, **caractérisé en ce que** les parties extérieures (10) sont articulées à des montants de toit (5) disposés latéralement par rapport à une lunette arrière (4) et **en ce que** leurs régions détournées de l'articulation peuvent être actionnées par des éléments de guidage (12) associés à la partie centrale (9) du couvercle (8).

8. Véhicule cabriolet (1) selon la revendication 7, **caractérisé en ce que**, lorsque le toit est fermé, les éléments de guidage (12) viennent en prise au-dessous des parties extérieures (10) qui sont élevées par glissement sur les éléments de guidage (12) lors de l'ouverture du toit.

9. Véhicule cabriolet (1) selon l'une quelconque des revendications 1 à 6, **caractérisé en ce que** les parties extérieures (10) sont articulées à la partie centrale (9) et peuvent être rabattues vers l'intérieur par rapport à celle-ci à cause du déplacement du toit.

10. Véhicule cabriolet (1) selon l'une quelconque des revendications 1 à 9, **caractérisé en ce que**, lorsque le toit est ouvert, les parties extérieures (10) sont rabattues vers l'intérieur par rapport à la partie centrale (9) et disposées au voisinage de sa face (9a) qui est tournée vers le bas lorsque le toit est fermé.

11. Véhicule cabriolet (1) selon l'une quelconque des revendications 1 à 10, **caractérisé en ce que** le toit comprend des parties de toit fixes (2;3) et **en ce que** des montants de toit (5) disposés en position latérale par rapport à la lunette arrière (4) peuvent pivoter vers l'intérieur, lors de l'ouverture du toit, autour d'axes (6) qui sont au moins sensiblement parallèles aux bords latéraux de la lunette arrière (4).

12. Véhicule cabriolet (1) selon la revendication 11, **caractérisé en ce que** les parties extérieures (10) peuvent être éloignées des montants latéraux (5) lors du pivotement de ces derniers, lesdites parties extérieures (10) étant ainsi rabattues vers l'intérieur par rapport à la partie centrale (9).
